# EUROPÄISCHE PATENTSCHRIFT

(11) **EP 0 594 672 B1**
(45) Veröffentlichungstag und Bekanntmachung des Hinweises auf die Patenterteilung: **21.06.1995**
(21) Anmeldenummer: 92914344.4
(22) Anmeldetag: 10.07.1992
(51) Int. Cl.: H01S 3/0975, H01S 3/07, H01S 3/041

(54) **GASLASER, INSBESONDERE CO2-LASER**
GAS LASER, IN PARTICULAR CO2 LASER
LASER A GAZ, NOTAMMENT LASER AU CO2

(30) Priorität: 16.07.1991 DE 4123470
(43) Veröffentlichungstag der Anmeldung: 04.05.1994
(73) Patentinhaber: SÜSSMUTH, Norbert, D-38106 Braunschweig (DE); WU, Jeng-Ming, D-38100 Braunschweig (DE)
(72) Erfinder: SÜSSMUTH, Norbert, D-38106 Braunschweig (DE); WU, Jeng-Ming, D-38100 Braunschweig (DE)
(74) Vertreter: Lins, Edgar, Dipl.-Phys. Dr.jur.
(86) Internationale Anmeldenummer: DE9200576
(87) Internationale Veröffentlichungsnummer: WO9302494

(56) Entgegenhaltungen:
- EP-A- 0 280 044
- EP-A- 0 392 485

## Beschreibung

Die Erfindung betrifft einen Gaslaser, insbesondere CO₂-Laser, mit einem durch die Zufuhr von HF-Leistung, insbesondere in Form von Mikrowellenenergie, zu einem Plasma angeregten Gas als Lasermedium, wobei HF-Wellen aus einem Rechteck-Hohlleiter in das Lasermedium eingekoppelt werden.

Grundsätzlich kann die Anregung des Lasermediums zum photonenausstrahlenden Plasma durch Anlegen eines elektrischen Feldes erfolgen, das ein Gleich- oder Wechselfeld sein kann. Im Laufe der Entwicklung von Gaslasern sind die Vorteile durch die Anregung mittels Hochfrequenzleistung immer deutlicher geworden. Die Anregungsfrequenz kann dabei bis in den Mikrowellenbereich reichen.

Um die Hochfrequenzleistung in das Gasplasma einzukoppeln, sind verschiedene Techniken bekannt. Bei einem sogenannten Bandleiter-Laser befindet sich das Lasermedium zwischen gegenüberliegenden Flächen zweier Wandteile, die gleichzeitig als Elektroden und zur Einkopplung der Energie ausgebildet sind. Da sich entlang der beiden plasmabegrenzenden Flächen der Bandleiter-Elektroden eine Grenzschicht bildet, die zur Erzeugung der Laserstrahlung nur wenig oder nichts beiträgt, ist die erzielbare Laser-Ausgangsleistung beschränkt.

Denkbar wäre, die Anregungsfrequenz zu erhöhen, da die Dicke der Grenzschichten im Plasma mit zunehmender Anregungsfrequenz abnimmt.

Mit den bisherigen Bandleiter-Lasern konnte eine Anregungsfrequenz im MHz-Bereich nicht zufriedenstellend gelöst werden.

Ein Gaslaser der eingangs erwähnten Art ist durch EP 0 280 044 A2 bekannt. Darin ist ein Gaslaser beschrieben, bei dem Mikrowellenenergie aus einem Rechteck-Hohlleiter mit einem allmählichen Übergang seitlich in das Lasermedium eingekoppelt wird. Diese Technik bedingt nicht nur einen relativ großen Platzbedarf sondern erlaubt auch keinen hohen Wirkungsgrad für die Einkopplung der Mikrowellenenergie.

Der Erfindung liegt daher die Aufgabe zugrunde, bei einem Gaslaser der eingangs erwähnten Art einen kompakten Aufbau und einen hohen Wirkungsgrad für die Einkopplung der HF-Leistung zu ermöglichen.

Diese Aufgabe wird mit einem Gaslaser der eingangs erwähnten Art erfindungsgemäß dadurch gelöst, daß die Einkopplung mit Hilfe eines bandförmigen Wellenleiters erfolgt, der in den Rechteck-Hohlleiter hineinragt.

Der bandförmige Wellenleiter sorgt dabei für eine seitliche Einkopplung der HF-Leistung in den Plasma-Entladungsraum, wobei er selbst die Endelektroden des Entladungsraums bilden kann. In einer bevorzugten Ausführungsform erfolgt daher die Einkopplung der HF-Wellen in das Lasermedium über die gesamte Länge des Plasmas.

Die erfindungsgemäße Konstruktion erlaubt einen kompakten Aufbau des Lasers, eine einwandfreie Einkopplung auch hoher Anregungsfrequenzen in das Plasma sowie die Auskopplung auf allen Seiten des Rechteck-Hohlleiters.

Um die HF-Energie, vorzugsweise Mikrowellenenergie, vom Rechteck-Hohlleiter in den Entladungsraum leicht einleiten zu können und möglichst wenig Reflexionen an der Stoßstelle, die durch die Unstetigkeit im Rechteck-Hohlleiter zustande kommt, ragt der Wellenleiter mit einer unsymmetrischen Form in den Rechteck-Hohlleiter hinein, wobei die maximale Eintauchtiefe des Wellenleiters in den Rechteck-Hohlleiter auf der Länge des Wellenleiters von dessen Mitte ausgehend zum einem HF-Generator abgewandten Ende verschoben ist.

In einer bevorzugten Ausführungsform eines solchen Wellenleiters weist der Wellenleiter eine stetige Wölbung auf, die von dem dem HF-Generator näheren Ende mit einer geringeren Krümmung zum maximalen Eintauchpunkt des Wellenleiters in den Rechteck-Hohlleiter als von dem maximalen Eintauchpunkt zum anderen Ende verläuft. Dabei kann der Wellenleiter etwa die Form einer e^{-x}-Funktion aufweisen.

In einer alternativen, unsymmetrischen Ausführungsform verläuft der Wellenleiter von dem dem HF-Generator näheren Ende etwa geradlinig bis zur maximalen Eintauchtiefe und führt etwa geradlinig von der maximalen Eintauchtiefe zum anderen Ende zurück. Dabei kann der Wellenleiter etwa in Dreieckform in den Rechteck-Hohlleiter hineinragen, so daß die maximale Eintauchtiefe an einem definierten Punkt der Länge des Wellenleiters erreicht wird. Es ist aber auch möglich, daß die maximale Eintauchtiefe über eine gewisse Länge des Wellenleiters erhalten bleibt, so daß er etwa in Viereckform in den Rechteck-Hohlleiter hineinragt.

Der Wellenleiter besteht vorzugsweise aus einem dielektrisch wirksamen Material und weist eine hohe optische Güte auf. Ein geeignetes Material ist eine Al₂O₃-Keramik.

Der Wellenleiter weist dabei vorzugsweise geglättete Oberflächen mit einer sehr geringen Restrauhigkeit auf.

Das Gehäuse des Entladungsraums ist vorzugsweise ein metallisches Gehäuse mit Leerräumen, in denen Wasser zur Kühlung zirkulieren kann. Dadurch wird sichergestellt, daß im Plasmagas eine bestimmte Grenztemperatur nicht überschritten wird, oberhalb derer die Erzeugung von Laserphotonen schnell abnehmen würde.

Vorzugsweise besteht das Gehäuse aus Aluminium. Die drei Seiten des Entladungsraums, die durch das Gehäuse gebildet werden, können mit Gold, Platin oder mit mit diesen Metallen dotierten Oxidschichten beschichtet sein. Die Beschichtungen wirken als Katalysator für den Anteil des Gases, der sich im Plasma zersetzt. Der Katalysator bewirkt eine Regeneration der zersetzten Gase, die andere Verbindungen eingegangen sind.

Mit der erfindungsgemäßen Konstruktion ist es möglich, daß der Entladungsraum abgeschlossen ist und das Lasermedium nicht strömt bzw. eine langsame Strömung (slow flow) aufweist.

Der Entladungsraum ist vorzugsweise spaltförmig ausgebildet, wobei die Breite des Spaltes 1 bis 2 mm groß ist.

Als Lasergas kann vorzugsweise ein Gemisch aus CO₂:N₂:He:Xe, vorzugsweise im Verhältnis 15:10:70:5 sein.

Zur Impedanzanpassung kann es zweckmäßig sein, am Ende des Rechteck-Hohlleiters einen verschiebbaren Kurzschluß einzusetzen.

Der Laser wird zweckmäßigerweise durch einen instabilen Resonator komplettiert. Die Frequenz der anregenden Mikrowellen kann im Bereich zwischen 1 GHz und 12 GHz liegen.

Die erfindungsgemäße Ausbildung erlaubt die Anordnung von zwei oder mehreren Entladungsräumen nebeneinander bzw. übereinander, wobei die Laserstrahlung über Umlenkprismen oder Umlenkspiegel jeweils von einem Entladungsraum zum nächsten geleitet wird.

Die Erfindung soll im folgenden anhand von in der Zeichnung dargestellten Ausführungsbeispielen näher erläutert werden. Es zeigen:
- Figur 1 -: einen schematischen Längsschnitt durch einen erfindungsgemäßen Gaslaser
- Figur 1a -: einen schematischen Querschnitt durch den Gaslaser gemäß Figur 1
- Figur 2 -: einen schematischen Längsschnitt gemäß Figur 1 mit einem dreieckförmig in den Rechteck-Hohlleiter ragenden Wellenleiter
- Figur 2a -: einen Querschnitt durch den Laser gemäß Figur 2
- Figur 3 -: einen Längsschnitt durch einen Gaslaser gemäß Figur 1 mit einem etwa viereckförmig in den Rechteck-Hohlleiter ragenden Wellenleiter
- Figur 3a -: einen Querschnitt durch den Gaslaser gemäß Figur 3
- Figur 4 -: einen Längsschnitt durch einen Gaslaser gemäß Figur 1 mit einem modifizierten Wellenleiter
- Figur 4a -: einen die Modifikation des Wellenleiters verdeutlichenden Querschnitt durch den Laser gemäß Figur 4
- Figur 5 -: einen Längsschnitt durch einen Gaslaser gemäß Figur 1, bei dem der Wellenleiter nicht über die gesamte Länge des Entladungsraumes in den Rechteck-Hohlleiter hineinragt.
- Figur 5a -: einen Querschnitt durch den Laser gemäß Figur 5
- Figur 6 -: einen Längsschnitt durch einen Laser gemäß Figur 5 mit einem modifizierten Wellenleiter
- Figur 6a -: einen Querschnitt durch den Laser gemäß Figur 6
- Figur 7 -: einen Längsschnitt durch einen Gaslaser gemäß Figur 1 mit zur Anpassung dienenden Kurzschlüssen
- Figur 7a -: einen Querschnitt durch den Laser gemäß Figur 7
- Figur 8 -: einen Gaslaser gemäß Figur 7 mit einem modifizierten Wellenleiter
- Figur 8a -: einen Querschnitt durch den Gaslaser gemäß Figur 8
- Figur 9 -: einen Längsschnitt durch einen Gaslaser mit jeweils zwei übereinander angeordneten Entladungsräumen
- Figur 9a -: einen Querschnitt durch den Laser gemäß Figur 9
- Figur 10 -: einen Längsschnitt durch einen Gaslaser gemäß Figur 9 mit einem modifizierten Wellenleiter
- Figur 10a -: einen Querschnitt durch den Gaslaser gemäß Figur 10
- Figuren 11a und 11b -: Modifikationen der Entladungsräume mit Gasreservoirs
- Figuren 12a und 12b -: den Figuren 11a und 11b entsprechende Modifikationen für ein Mehr-Kanal-System
- Figur 13 -: einen Querschnitt durch einen Gaslaser mit einer Auskopplung aus der langen Seite des Rechteck-Hohlleiters
- Figur 14 -: einen Querschnitt durch einen Gaslaser mit drei Auskopplungen aus dem Rechteck-Hohlleiter zu jeweils Mehr-Kanal-Systemen
- Figur 15 -: einen Querschnitt durch einen Gaslaser mit vier Auskopplungen aus dem Rechteck-Hohlleiter mit jeweils Mehr-Kanal-Systemen
- Figur 16 -: einen Querschnitt durch einen Entladungsraum des Gaslasers mit einer Zirkulation des Gases
- Figur 17 -: eine perspektivische schematische Ansicht eines Gaslasers gemäß Figur 1.

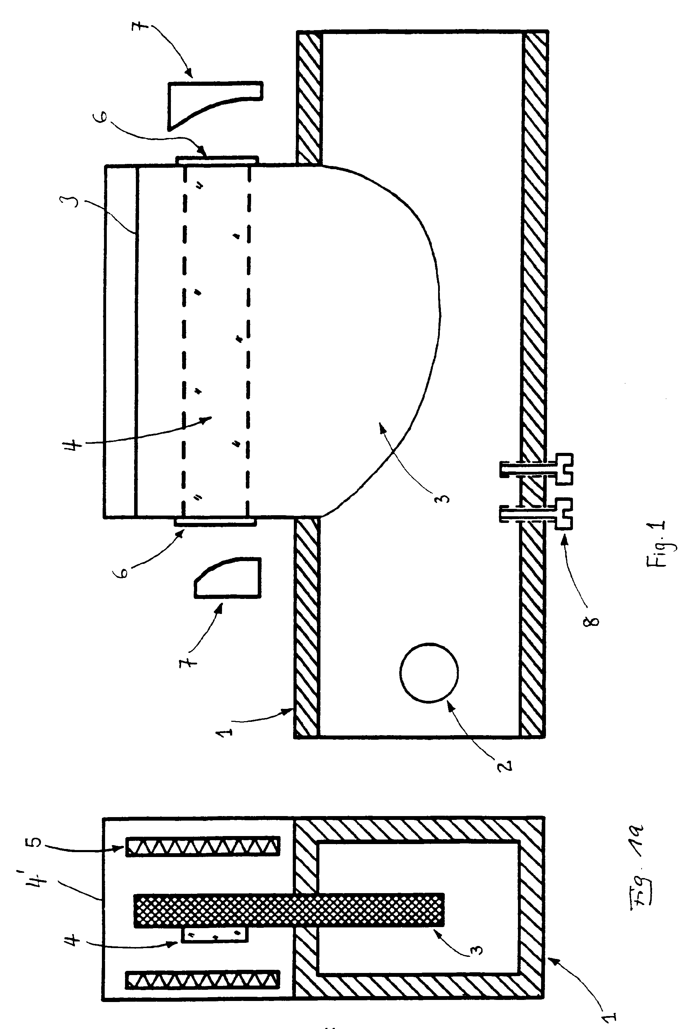

Figur 1 zeigt einen Rechteck-Hohlleiter 1, der an einem Ende mit einem Magnetron als HF-Generator 2 versehen ist. Die in dem Rechteck-Hohlleiter 1 ausgebildete Mikrowelle wird über einen Wellenleiter 3 seitlich aus dem Rechteck-Hohlleiter ausgekoppelt. Der Wellenleiter 3 ist so geformt, daß er in die Stirnwände eine Aluminiumgehäuses 4′ übergeht. Der Abstand zwischen den Enden des Wellenleiters 3 entspricht der Länge des Entladungsraums 4, der, wie Figur la verdeutlicht, als schmaler Spalt ausgebildet ist.

Wie Figur la ferner verdeutlicht, weist das Aluminiumgehäuse 4′ Leerräume 5 auf, in denen Wasser zur Kühlung zirkuliert.

Stirnseitig von dem Entladungsraum 4 befinden sich für die Laserstrahlung durchlässige Fenster 6, hinter denen sich Spiegel 7 befinden, die gemeinsam einen instabilen Laserresonator bilden.

Das Magnetron kann beispielsweise eine Ausgangsfrequenz von 2,45 GHz haben und direkt an einen R26-Rechteck-Hohlleiter 1 angeschlossen sein. Die Maße des Rechteck-Hohlleiters 1 sind so dimensioniert, daß nur die Grundwellen, nämlich TE₁₀-Wellen, ausbreitungsfähig sind. Das elektrische Feld der Grundwelle steht dann senkrecht zur Längsachse des Rechteck-Hohlleiters 1.

Die Anregung des Plasmas erfolgt üblicherweise so, daß ein Übergang zwischen Rechteck-Hohlleiter 1 und Entladungsraum 4 vorgesehen sein muß. Der Übergang wird durch den Wellenleiter 3 gebildet, der in den Rechteck-Hohlleiter 1 hineinragt und dort möglichst wenig Reflexionen verursachen darf. Durch den Wellenleiter 3 muß die benötigte Welle in den Entladungsraum 4 einleitbar sein. Außerdem sollte die Mikrowellenenergie gleichmäßig über die gesamte Länge des Entladungsraums eingespeist werden.

Der Wellenleiter besteht aus einem Dielektrikum, dessen Material vorzugsweise nur geringen Reflexionsverlust für die Strahlung des Lasers besitzen soll, um somit die Dämpfung gering zu halten. Der Wellenleiter 3 besteht vorzugsweise aus einer Al₂O₃-Keramik.

Um die Mikrowellenenergie vom Rechteck-Hohlleiter 1 in den Entladungsraum 4 leicht einleiten zu können und möglichst wenig Reflexionen an der Stoßstelle zu verursachen, hat der Wellenleiter 3 eine besondere Form im Rechteck-Hohlleiter 1. In Figur 1 dargestellte Form kann durch eine e^{-x}-Funktion beschrieben werden. Die Länge des Wellenleiters 3 deckt die gesamte Länge des Entladungsraums 4 ab. Vorzugsweise sollte die Länge mindestens 2 λ_{g} betragen, wobei λ_{g} die Wellenlänge im Rechteck-Hohlleiter 1 ist. Je länger der Wellenleiter 3 ist, desto weniger Reflexion wird an der Stoßstelle verursacht. Die Dicke des Wellenleiters 3 kann leicht durch eine Feldberechnung bestimmt werden. Für optimale Wellenleitereigenschaften sind z. B. die Einsätze der Al₂O₃-Keramik mit geglätteten Oberflächen und sehr geringer Restrauhigkeit ausgestattet.

Im allgemeinen ist damit zu rechnen, daß im Plasma ein Anteil des Gases zersetzt wird und andere Verbindungen eingeht. Zur Regeneration ist es vorteilhaft, einen Katalysator auf den drei Seiten des Entladungsraums 4, der durch das Aluminiumgehäuse 4′ gebildet wird, aufzubringen. Als Katalysator eignen sich Schichten aus Metallen wie Gold, Platin oder mit diesen Metallen dotierte Oxidschichten.

In dem spaltförmigen Entladungsraum 4 bildet sich im Vergleich zum Rechteck-Hohlleiter 1 eine höhere elektrische Feldstärke aufgrund der kleinen Spaltbreite aus. Der Entladungsspalt besitzt vorteilhaft eine Spaltbreite von 1 mm bis 2 mm und einer Höhe von etwa 20 mm.

Als Lasergas ist beispielsweise ein Gasgemisch aus CO₂:N₂:He:Xe mit Anteilen von 15:10:70:5 geeignet. Der Gasdruck kann je nach Aufbau eingestellt werden, um eine maximale Laser-Ausgangsleistung zu erreichen.

Der Wellenleiterlaser ist vorteilhaft mit einem durch die Spiegel 7 gebildeten instabilen Resonator ausgerüstet. Dabei wird bei hoher Strahlintensität eine relativ einfache Energieauskopplung und eine bessere Ausnutzung der vollen Breite des Entladungsspaltes erreicht.

Zur Impedanzanpassung sind im Rechteck-Hohlleiter 1 Abstimmschrauben 8 vorgesehen, die vorzugsweise vor dem Anfang der Stoßstelle eingesetzt sind.

In den folgenden Figuren sind für die funktional gleichen Teile gleiche Bezugsziffern eingesetzt, obwohl die Teile Modifikationen unterworfen sein können.

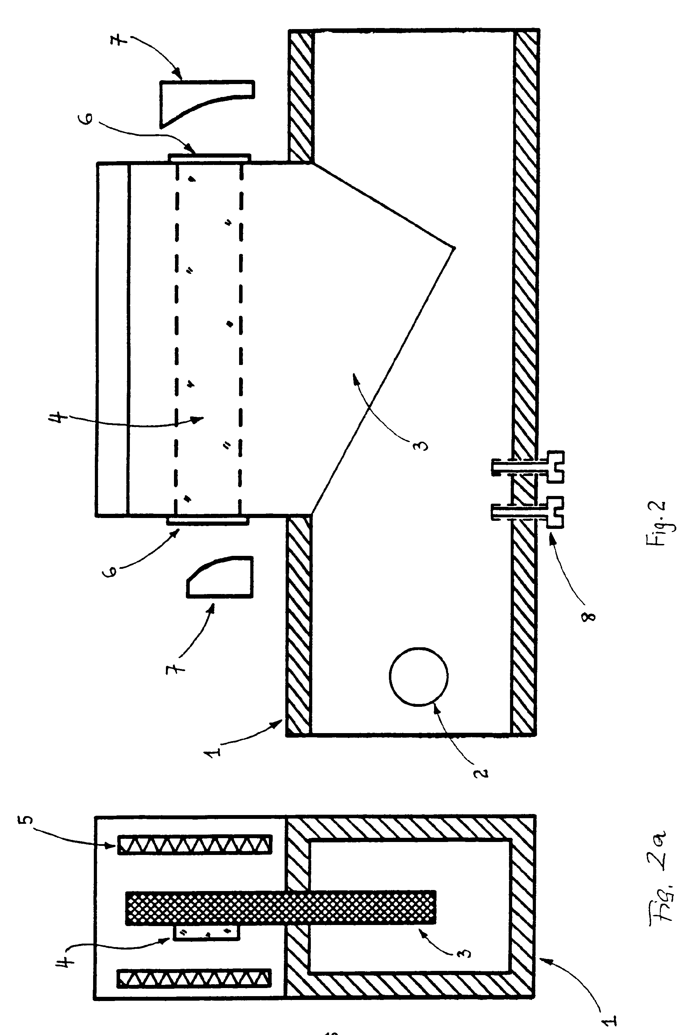

In Figur 2 ist ein abgewandeltes Ausführungsbeispiel dargestellt, bei dem der Wellenleiter 3 von dem dem HF-Generator 2 näher liegenden Ende zum tiefsten Eintauchpunkt in den Rechteck-Hohlleiter 1 etwa geradlinig übergeht und mit einem Knick etwa geradlinig zum anderen Ende zurückläuft, so daß der Wellenleiter etwa dreieckförmig in den Rechteck-Hohlleiter eintaucht. Auch diese Ausbildung des unsymmetrischen Wellenleiters 3 ist geeignet, mit geringen Reflexionsverlusten Mikrowellenenergie auf den Entladungsraum 4 zu übertragen.

Figur 2a verdeutlicht, daß keine sonstigen Veränderungen gegenüber Figur 1 vorgenommen sind.

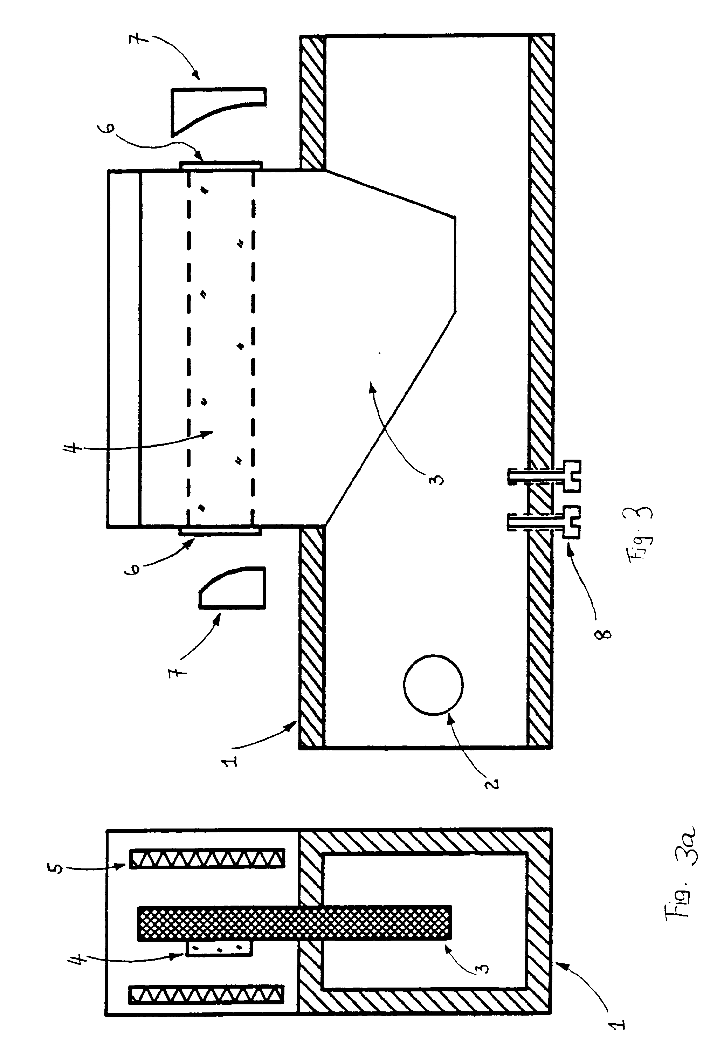

Bei der in Figur 3 und 3a dargestellten Ausführungsform ist der Wellenleiter 3 etwa viereckförmig ausgebildet, weil er über ein etwa geradliniges Stück auf der maximalen Eintauchtiefe im Rechteck-Hohlleiter 1 verbleibt.

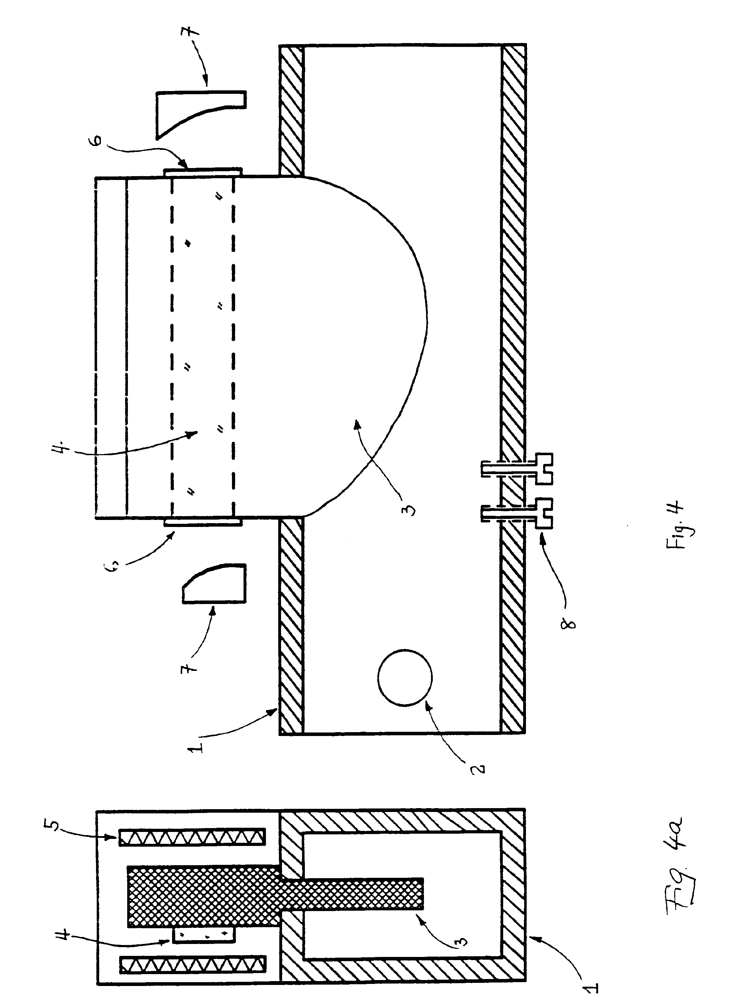

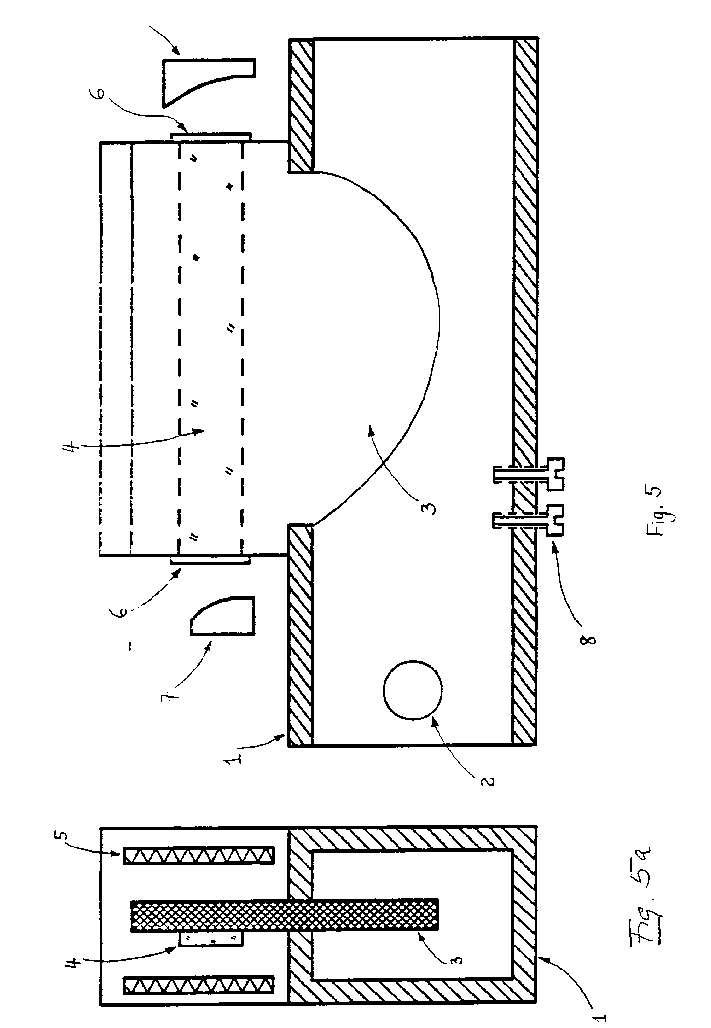

Figur 4 zeigt eine Modifikation des Gaslasers gemäß Figur 1, bei dem der Wellenleiter 3 außerhalb des Rechteck-Hohlleiters 1 stufenförmig verbreitert ist.

Da die Mikrowellenenergie gleichmäßig über die gesamte Länge des Entladungsraums 4 eingespeist werden soll, besitzt der Wellenleiter vorteilhaft die Eigenschaften eines mit Dielektrikum gefüllten Hohlraum-Resonators, in dem die elektrische Feldrichtung vorzugsweise senkrecht auf dem Entladungsraum 4 steht.

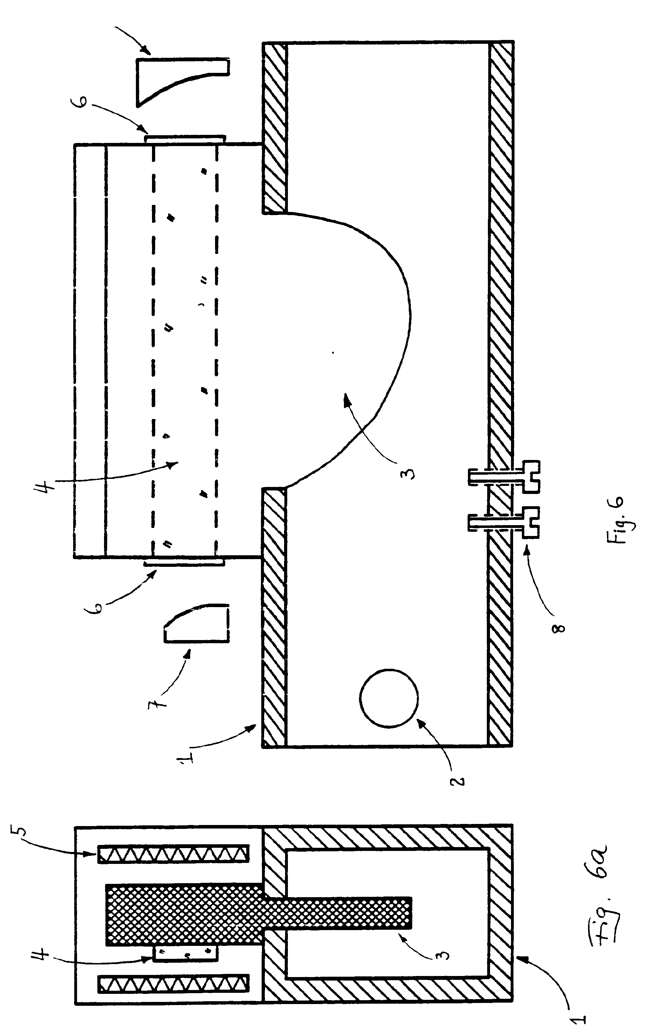

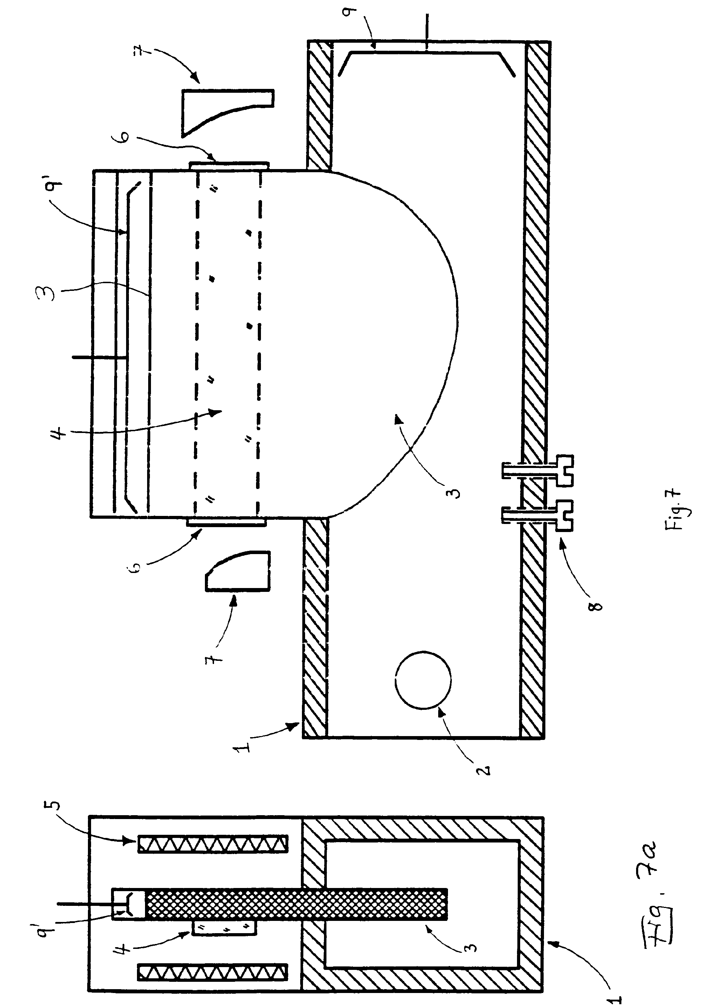

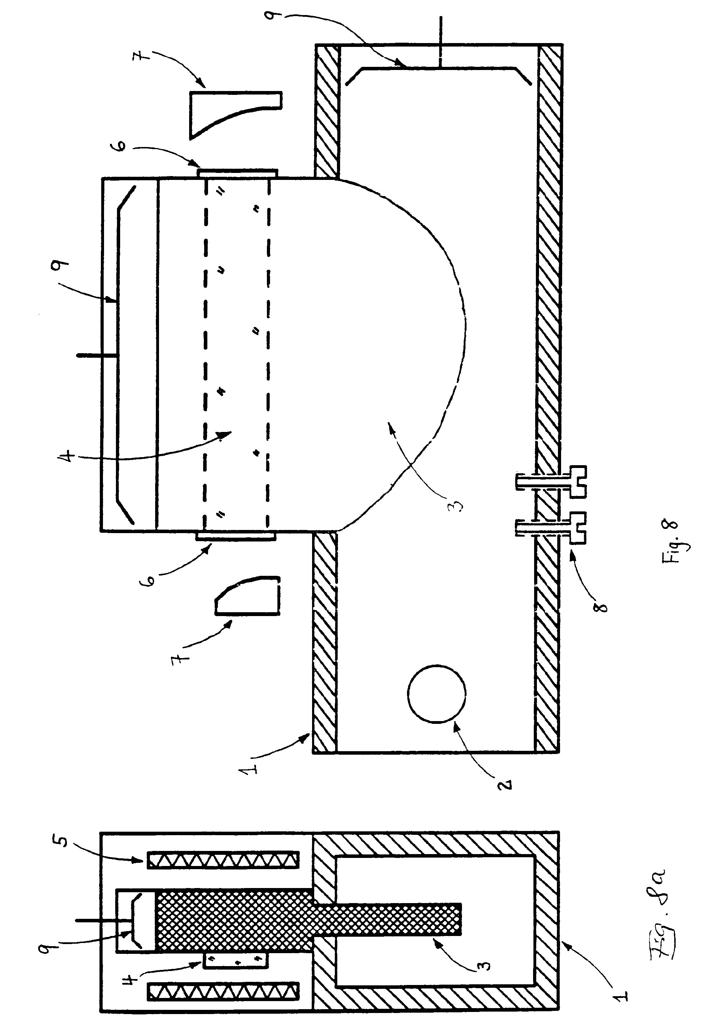

Besitzt der Wellenleiter 3 die Eigenschaft des mit einem Dielektrikum gefüllten Hohlraum-Resonators, ist die Länge des Wellenleiters 3, und damit auch die Länge des Entladungsraums 4, nicht mehr durch die Länge des Rechteck-Hohlleiters 1 beschränkt. Die Figuren 5, 5a und 6, 6a zeigen daher Ausführungsbeispiele mit einem verlängerten Wellenleiter, der nur noch über einen Teil seiner Länge in den Rechteck-Hohlleiter 1 hineinragt. Der Unterschied zwischen den Ausführungsformen gemäß Figuren 5, 5a und 6, 6a besteht wiederum in der stufenförmigen Erweiterung des Wellenleiters 3 außerhalb des Rechteck-Hohlleiters 1 in der Ausführungsform gemäß Figuren 6, 6a.

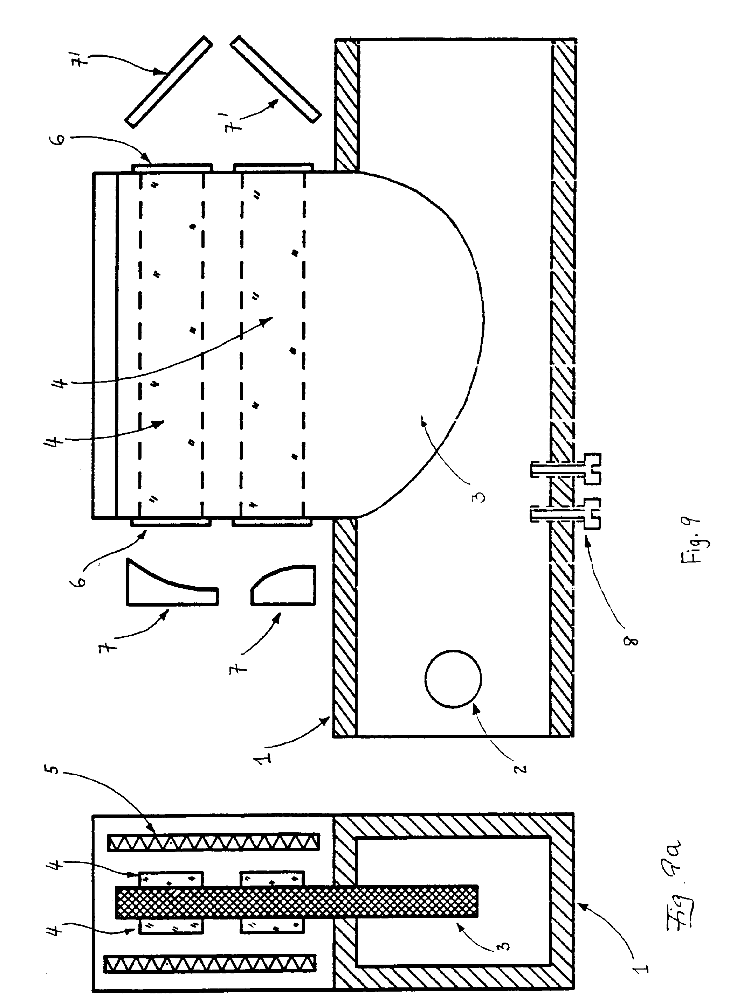

Um die Anpassung der Mikrowellen zwischen Rechteck-Hohlleiter 1 und Entladungsraum 4 zu verbessern, kann ein verschiebbarer Kurzschluß 9 am Ende des Rechteck-Hohlleiters 1 und ein weiterer verschiebbarer Kurzschluß 9′ über dem Wellenleiter 3 eingesetzt sein, wie dies die Figuren 7, 7a zeigen.

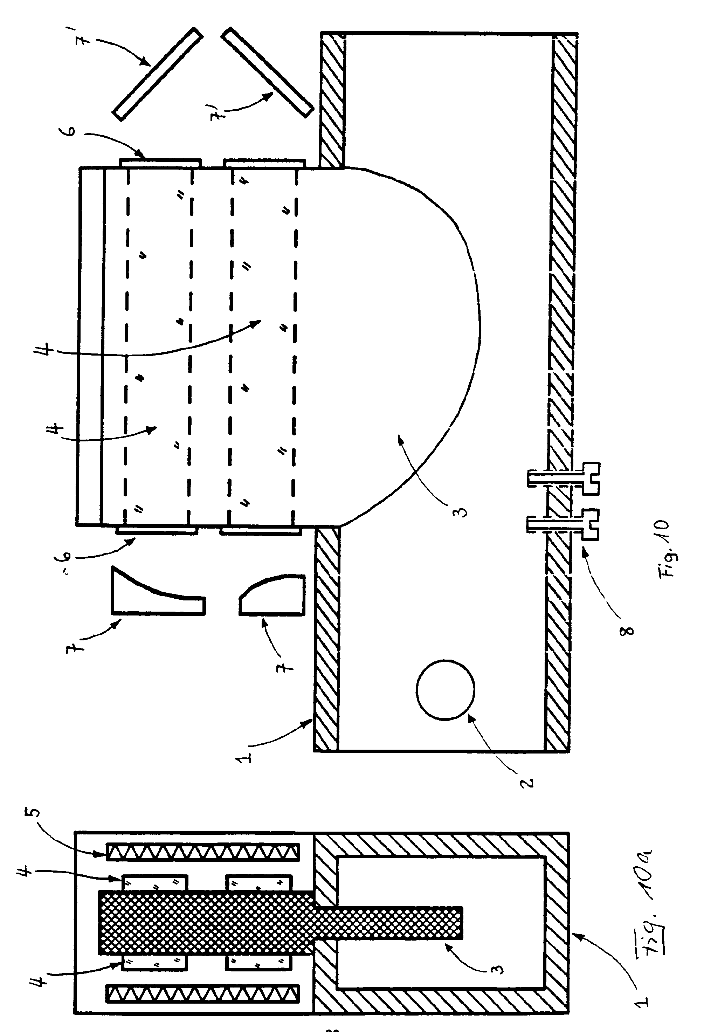

Figuren 8, 8a entsprechen den Figuren 7, 7a mit der bekannten Modifikation, daß der Wellenleiter 3 außerhalb des Rechteck-Hohlleiters eine stufenförmig vergrößerte Breite aufweist.

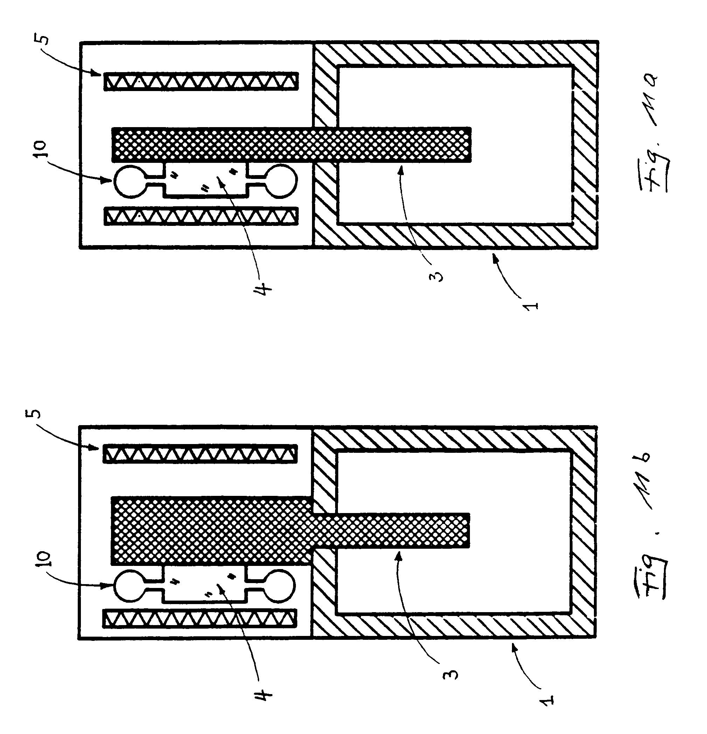

Je länger der Entladungsraum 4 ist, desto besser sind die Strahlqualität und der Wirkungsgrad des Lasers. Figuren 9, 9a zeigen ein Mehr-Kanal-System mit jeweils zwei übereinander und zwei nebeneinander angeordneten Entladungsräumen 4, die für die Laserstrahlung aufgrund der Umlenkspiegel 7′ hintereinander geschaltet sind. Auf diese Weise entsteht ein umgelenkter, ggf. mäanderförmiger Laserstrahl zwischen den Spiegeln 7.

Figuren 10, 10a zeigen den Aufbau gemäß Figur 9 mit der bereits erwähnten Modifikation einer größeren Breite des Wellenleiters 3 außerhalb des Rechteck-Hohlleiters 1.

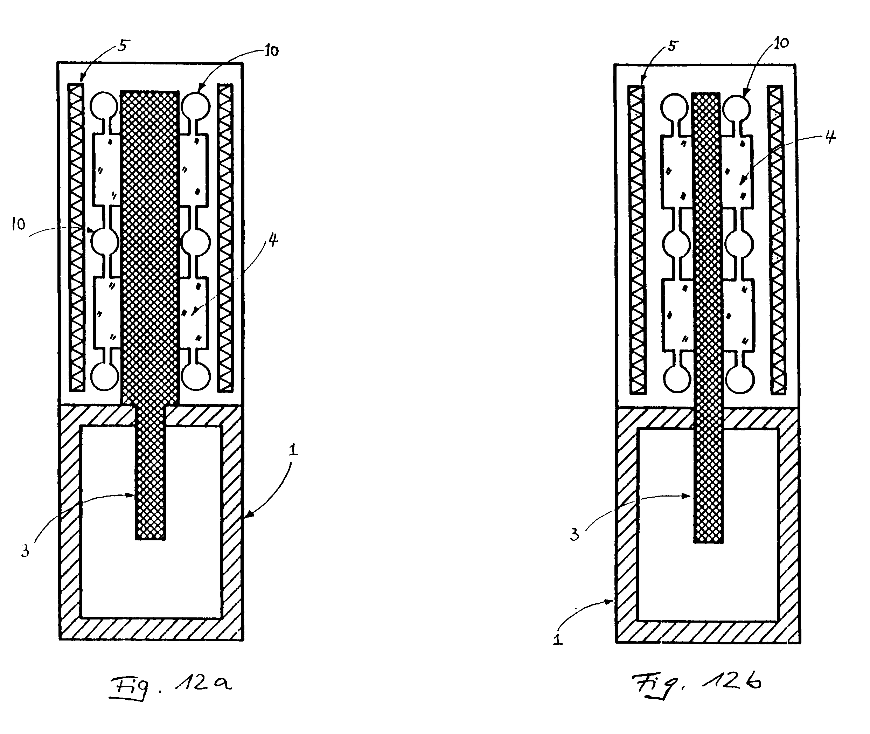

In den Figuren 11a und 11b sind die beiden bereits beschriebenen Formen des Wellenleiters 3 dargestellt, wobei der neben dem Wellenleiter angeordnete Entladungsraum 4 mit einem Gasreservoir 10 versehen ist. Die Verbindung zwischen Gasreservoir 10 und Entladungsraum 4 wird durch (nicht dargestellte) kleine Löcher ermöglicht.

Während Figuren 11a und 11b den Aufbau eines Ein-Kanal-Systems zeigen, ist in den Figuren 12a und 12b jeweils ein entsprechendes Mehr-Kanal-System dargestellt, bei dem die Entladungsräume 4 beidseitig jeweils mit einem Gasreservoir 10 versehen sind.

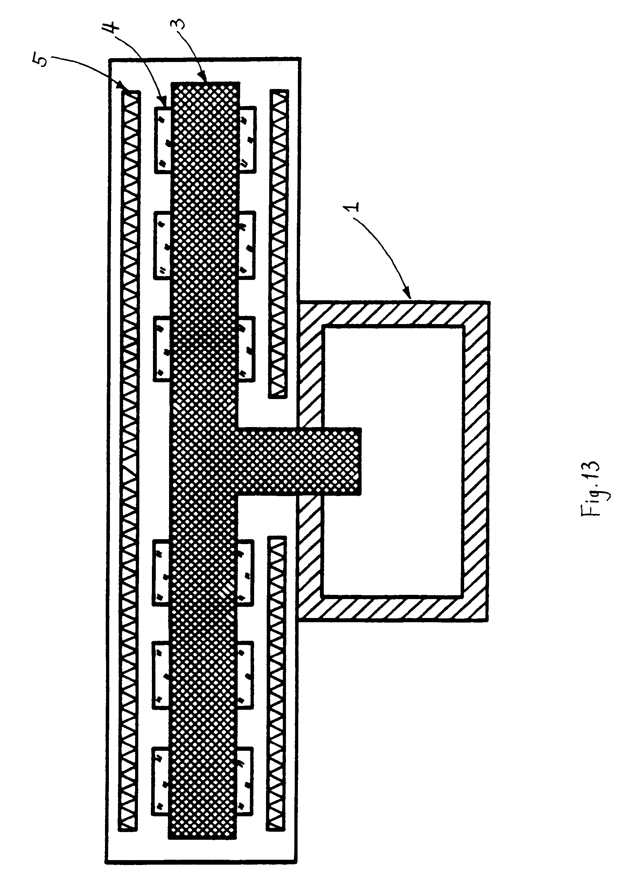

Figur 13 zeigt eine in dem erfindungsgemäßen Aufbau mögliche Einkopplung der Mikrowellenenergie über die längere Seite des Rechteck-Hohlleiter 1, hier dargestellt für ein Mehr-Kanal-System mit mehreren Entladungsräumen 4.

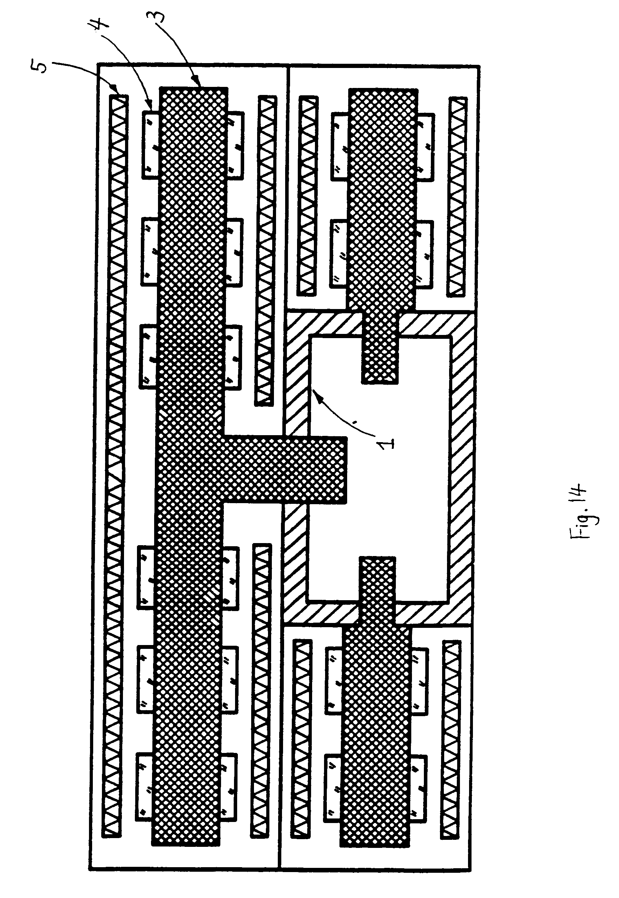

Figur 14 zeigt eine kombinierte Auskopplung der Mikrowellenenergie aus dem Rechteck-Hohlleiter 1 auf den beiden schmalen Seiten und auf einer langen Seite, so daß auf drei Seiten des Rechteck-Hohlleiters 1 eine Auskopplung mit Hilfe von Wellenleitern 3 erfolgt. Dargestellt ist für jeden Wellenleiter 3 ein Mehr-Kanal-System.

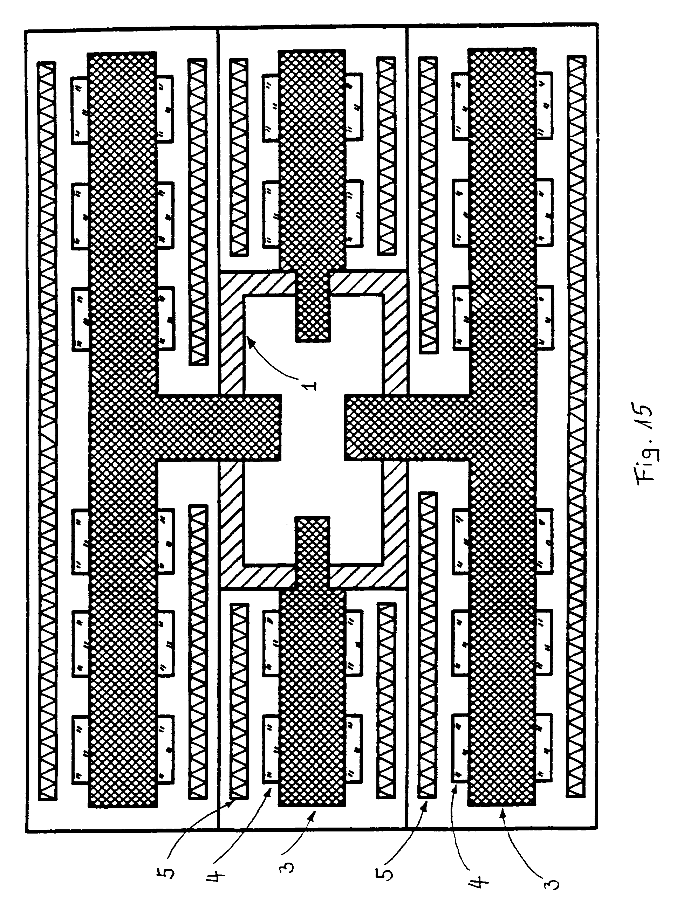

Figur 15 zeigt eine Modifikation, bei der die Auskopplung auf allen vier Seiten des Rechteck-Hohlleiters 1 erfolgt.

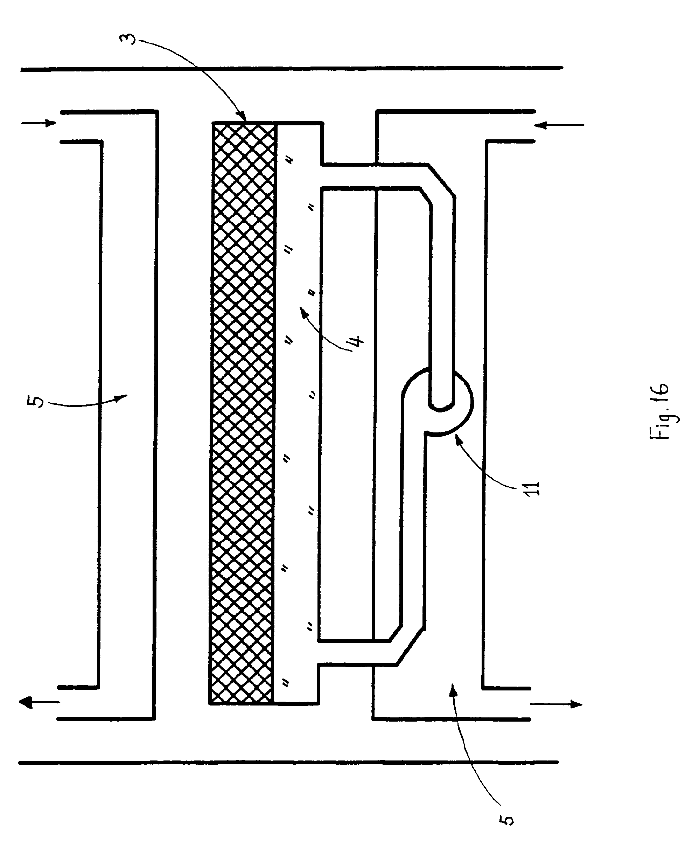

Figur 16 zeigt eine Konstruktion, die zur verbesserten Kühlung des Lasergases dient. Das Lasergas ist dabei an eine Gaszirkulation 11 angeschlossen. Der Entladungsraum 4 wird über Zuleitungen mit der in einem wasserdurchströmten Leerraum 5 angeordneten Gaszirkulation in Form eines Rotors verbunden.

Der Rotor kann dabei durch die Strömung des Wassers im Kühlraum angetrieben sein.

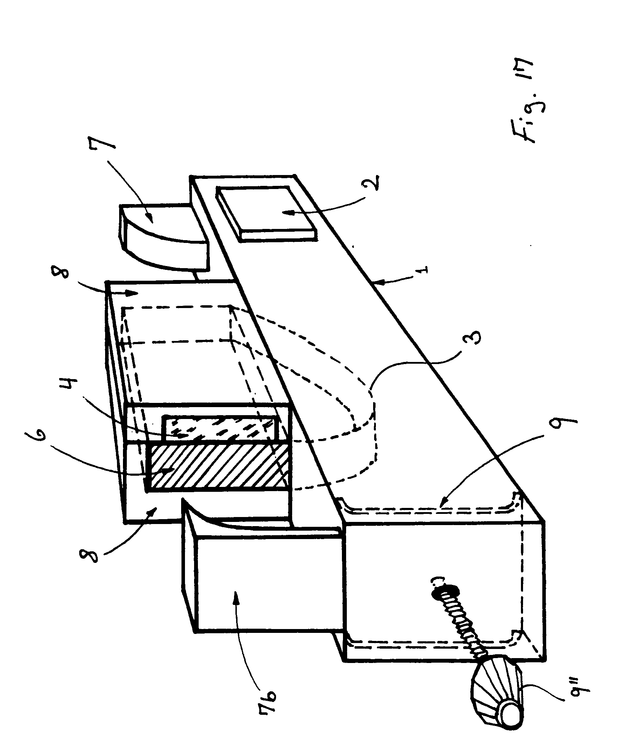

Figur 17 zeigt in einer perspektivischen Darstellung die räumliche Anordnung des Rechteck-Hohlleiters 1 mit seinem HF-Generator 2 und einem mit Hilfe einer Schraube 9" verschiebbaren Kurzschluß 9 zur Abstimmung. Ferner wird die räumliche Anordnung des geschlossenen Wellenleiters 3 und der daneben angeordnete spaltförmige Entladungsraum 4 deutlich.

## Patentansprüche

1. Gaslaser, insbesondere CO₂-Laser, mit einem durch die Zufuhr von HF-Leistung, insbesondere in Form von Mikrowellenenergie, zu einem Plasma angeregten Gas als Lasermedium, wobei HF-Wellen aus einem Rechteck-Hohlleiter (1) in das Lasermedium (4) eingekoppelt werden, **dadurch gekennzeichnet, daß** die Einkopplung mit Hilfe eines bandförmigen Wellenleiters (3) erfolgt, der in den Rechteck-Hohlleiter (1) hineinragt.

2. Gaslaser nach Anspruch 1, dadurch gekennzeichnet, daß die Einkopplung der HF-Wellen in das Lasermedium (4) über die gesamte Länge des Plasmas erfolgt.

3. Gaslaser nach Anspruch 1 oder 2, dadurch gekennzeichnet, daß der Wellenleiter (3) mit einer unsymmetrischen Form in den Rechteck-Hohlleiter (1) hineinragt, wobei die maximale Eintauchtiefe des Wellenleiters in den Rechteck-Hohlleiter (1) auf der Länge des Wellenleiters (3) von dessen Mitte ausgehend zum dem HF-Generator (2) abgewandten Ende verschoben ist.

4. Gaslaser nach Anspruch 3, dadurch gekennzeichnet, daß der Wellenleiter (3) eine stetige Wölbung aufweist, die von seinem dem HF-Generator (2) näheren Ende mit einer geringeren Krümmung zum maximalen Eintauchpunkt des Wellenleiters (3) in den Rechteck-Hohlleiter (1) als von dem maximalen Eintauchpunkt zum anderen Ende verläuft.

5. Gaslaser nach Anspruch 4, dadurch gekennzeichnet, daß die Form des Wellenleiters (3) etwa einer e^{-x}-Funktion entspricht.

6. Gaslaser nach Anspruch 3, dadurch gekennzeichnet, daß der Wellenleiter (3) vom dem HF-Generator (2) näheren Ende etwa geradlinig bis zur maximalen Eintauchtiefe verläuft und etwa geradlinig von der maximalen Eintauchtiefe zum anderen Ende zurückführt.

7. Gaslaser nach Anspruch 6, dadurch gekennzeichnet, daß der Wellenleiter (3) etwa in Dreieckform in den Rechteck-Hohlleiter (1) hineinragt.

8. Gaslaser nach Anspruch 6, dadurch gekennzeichnet, daß die maximale Eintauchtiefe über eine gewisse Länge des Wellenleiters (3) erhalten bleibt, so daß er etwa in Viereckform in den Rechteck-Hohlleiter (1) hineinragt.

9. Gaslaser nach einem der Ansprüche 1 bis 8, dadurch gekennzeichnet, daß der Wellenleiter (3) aus einem dielektrisch wirksamen Material besteht und eine hohe optische Güte aufweist.

10. Gaslaser nach Anspruch 9, dadurch gekennzeichnet, daß der Wellenleiter aus einer Al₂O₃-Keramik besteht.

11. Gaslaser nach Anspruch 9 oder 10, dadurch gekennzeichnet, daß die Einsätze eines Dielektrikums als Wellenleiter (3) mit geglätteten Oberflächen und sehr geringer Restrauhigkeit ausgestattet sind.

12. Gaslaser nach einem der Ansprüche 1 bis 11, dadurch gekennzeichnet, daß der Entladungsraum (4) in einem Metallblock als Gehäuse (4′) ausgebildet ist und daß der Metallblock Leerräume (5) aufweist, in denen Wasser zur Kühlung zirkuliert.

13. Gaslaser nach einem der Ansprüche 1 bis 12, dadurch gekennzeichnet, daß drei Seiten des Entladungsraums (4), die durch den Metallblock (4′) gebildet sind, mit Gold, Platin oder mit mit diesen Metallen dotierten Oxidschichten beschichtet sind.

14. Gaslaser nach einem der Ansprüche 1 bis 13, dadurch gekennzeichnet, daß der Entladungsraum (4) abgeschlossen ist und das Lasergas keiner Strömung unterliegt.

15. Gaslaser nach einem der Ansprüche 1 bis 13, dadurch gekennzeichnet, daß das Lasergas eine langsame Strömung aufweist.

16. Gaslaser nach einem der Ansprüche 1 bis 15, dadurch gekennzeichnet, daß das Lasergas ein Gemisch aus CO₂:N₂:He:Xe ist.

17. Gaslaser nach Anspruch 16, dadurch gekennzeichnet, daß sich die Bestandteile CO₂:N₂:He:Xe im Verhältnis 15:10:70:5 im Lasergas befinden.

18. Gaslaser nach einem der Ansprüche 1 bis 17, dadurch gekennzeichnet, daß der Entladungsraum (4) spaltförmig ausgebildet ist.

19. Gaslaser nach Anspruch 18, dadurch gekennzeichnet, daß die Breite des spaltförmigen Entladungsraums (4) 1 bis 2 mm beträgt.

20. Gaslaser nach einem der Ansprüche 1 bis 19, gekennzeichnet durch einen am Ende des Rechteck-Hohlleiters (1) eingesetzten verschiebbaren Kurzschluß (9).

21. Gaslaser nach einem der Ansprüche 1 bis 20, dadurch gekennzeichnet, daß er einen instabilen Resonator (7) aufweist.

22. Gaslaser nach einem der Ansprüche 1 bis 21, dadurch gekennzeichnet, daß die HF-Frequenz zwischen 1 GHz und 12 GHz liegt.

23. Gaslaser nach einem der Ansprüche 1 bis 22, dadurch gekennzeichnet, daß zwei oder mehrere Entladungsräume (4) übereinander bzw. nebeneinander angeordnet sind und die Laserstrahlung über Umlenkeinrichtungen (7′) jeweils von einem Entladungsraum (4) zum nächsten geleitet wird.

24. Gaslaser nach einem der Ansprüche 1 bis 23, dadurch gekennzeichnet, daß die Auskopplung über den Wellenleiter (3) auf einer größeren Seite des Rechteck-Hohlleiters (1) erfolgt.

25. Gaslaser nach einem der Ansprüche 1 bis 24, dadurch gekennzeichnet, daß eine Auskopplung der HF-Energie aus dem Rechteck-Hohlleiter (1) auf mehreren Seiten des Rechteck-Hohlleiters (1) auf der bezüglich der Länge identischen Höhe erfolgt.

26. Gaslaser nach Anspruch 25, dadurch gekennzeichnet, daß die Auskopplung mit Wellenleitern (3) auf allen vier Seiten des Rechteck-Hohlleiters (1) erfolgt.

## Claims

1. A gas laser, preferably a CO₂ laser, with a laser medium formed by gas excited to yield a plasma through the input of high frequency energy, preferably in the form of microwave energy, wherein high-frequency waves from a rectangular hollow waveguide (1) are coupled into the laser medium (4), characterised in that coupling proceeds through the use of a strip-shaped waveguide (3) which projects into the rectangular hollow waveguide (1).

2. A gas laser according to claim 1, characterised in that the high-frequency waves are coupled into the laser medium (4) along the entire length of the plasma.

3. A gas laser according to either claim 1 or claim 2, characterised in that the strip-shaped waveguide (3) projects into the rectangular hollow waveguide (1) with an unsymmetrical shape, with the maximum penetration depth of the strip-shaped waveguide into the rectangular hollow waveguide (1) displaced along the length of the strip-shaped waveguide (3) from its centre to that end facing away from a high-frequency generator (2).

4. A gas laser according to claim 3, characterised in that the strip-shaped waveguide (3) has a continuous curvature which extends from that end closer to the high-frequency generator (2) with a lower curvature to the maximum penetration point of the strip-shaped waveguide (3) in the rectangular hollow waveguide (1) than from the maximum penetration point to the other end.

5. A gas laser according to claim 4, characterised in that the shape of the strip-shaped waveguide (3) corresponds approximately to an e^{-x} function.

6. A gas laser according to claim 3, characterised in that the strip-shaped waveguide (3) extends from that end closer to the high-frequency generator (2) in an approximately straight line up to the maximum penetration depth and leads in an approximately straight line back to the other end.

7. A gas laser according to claim 6, characterised in that the part of the strip-shaped waveguide (3) which projects into the rectangular hollow waveguide (1) is approximately triangular.

8. A gas laser according to claim 6, characterised in that the maximum penetration depth is maintained along a certain length of the strip-shaped waveguide (3) so that that part of it which projects into the rectangular hollow waveguide (1) is approximately quadrilateral.

9. A gas laser according to any one of claims 1 to 8, characterised in that the strip-shaped waveguide is comprised of a dielectric material and has a high optical quality.

10. A gas laser according to claim 9, characterised in that the strip-shaped waveguide is made of an Al₂O₃ ceramic.

11. A gas laser according to claim 9 or claim 10, characterised in that the inserts of a dielectric as the strip-shaped waveguide (3) are provided with smoothened surfaces and have a very low residual roughness.

12. A gas laser according to any one of claims 1 to 11, characterised in that the discharge zone (4) is formed in a metal block as housing (4′) and that the metal block is provided with empty compartments (5) in which water circulates for cooling.

13. A gas laser according to any one of claims 1 to 12, characterised in that three sides of the discharge zone (4) which are formed through the metal block (4′) are coated with gold or platinum or with oxide layers doped with these metals.

14. A gas laser according to any one of claims 1 to 13, characterised in that the discharge zone (4) is sealed and that the laser gas is non-flowing.

15. A gas laser according to any one of claims 1 to 13, characterised in that the laser gas flows at a slow rate.

16. A gas laser according to any one of claims 1 to 15, characterised in that the laser gas is a mixture from CO₂:N₂:He:Xe.

17. A gas laser according to claim 16, characterised in that the constituents CO₂:N₂:He:Xe are contained in the laser gas in the ratio 15:10:70:5.

18. A gas laser according to any one of claims 1 to 17, characterised in that the discharge zone (4) is in the form of a slit.

19. A gas laser according to claim 18, characterised in that the width of the slit-shaped discharge zone (4) is between 1 and 2 mm.

20. A gas laser according to any one of claims 1 to 19, characterised in that a displaceable short-circuit (9) is arranged at the end of the rectangular hollow waveguide (1).

21. A gas laser according to any one of claims 1 to 20, characterised in that it is provided with an unstable resonator (7).

22. A gas laser according to any one of claims 1 to 21, characterised in that the high-frequency lies between 1 GHz and 12 GHz.

23. A gas laser according to any one of claims 1 to 22, characterised in that two or more discharge zones (4) are arranged above one another or next to each other and the laser radiation is guided from one discharge zone (4) to the next through deflecting devices (7′).

24. A gas laser according to any one of claims 1 to 23, characterised in that decoupling through the strip-shaped waveguide (3) is on a larger side of the rectangular hollow waveguide (1).

25. A gas laser according to any one of claims 1 to 24, characterised in that decoupling of the high-frequency energy from the rectangular hollow waveguide (1) to a plurality of sides of the rectangular hollow waveguide (1) proceeds at an identical height with respect to the length.

26. A gas laser according to claim 25, characterised in that decoupling with strip-shaped waveguides (3) takes place on all four sides of the rectangular hollow waveguide (1).

## Revendications

1. Laser à gaz, en particulier laser au CO₂, comportant comme milieu laser un gaz excité en un plasma par introduction de puissance HF , notamment sous la forme d'énergie micro-ondes, dans lequel des ondes HF sont injectées dans le milieu laser (4) à partir d'un guide creux rectangulaire, caractérisé en ce que l'injection s'effectue à l'aide d'un guide d'ondes (3) en forme de bande qui fait saillie dans le guide creux rectangulaire (1).

2. Laser à gaz selon la revendication 1, caractérisé en ce que l'injection des ondes HF dans le milieu laser à lieu sur toute la longueur du plasma.

3. Laser à gaz selon la revendication 1 ou 2, caractérisé en ce que le guide d'ondes (3) fait saillie dans le guide creux rectangulaire (1) suivant une forme asymétrique, la profondeur de saillie maximale du guide d'ondes dans le guide creux rectangulaire (1) étant, sur la longueur du guide d'ondes (3), décalée à partir du milieu de ce dernier vers l'extrémité opposée au générateur HF (2).

4. Laser à gaz selon la revendication 3, caractérisé en ce que le guide d'ondes (3) présente un bombé continu, qui s'étend suivant une courbure plus faible depuis son extrémité proche du générateur HF (2) jusqu'au point de saillie maximale du guide d'ondes (3) dans le guide creux rectangulaire (1) que depuis le point de saillie maximale jusqu'à l'autre extrémité.

5. Laser à gaz selon la revendication 4, caractérisé en ce que la forme du guide d'ondes (3) correspond sensiblement à une fonction e^{-x}.

6. Laser à gaz selon la revendication 3, caractérisé en ce que le guide d'ondes (3) s'étend sensiblement rectilinéairement à partir de l'extrémité proche du générateur HF (2) jusqu'à la profondeur de saillie maximale et revient sensiblement rectilinéairement de la profondeur de saillie maximale jusqu'à l'autre extrémité.

7. Laser à gaz selon la revendication 6, caractérisé en ce que le guide d'ondes (3) présente en saillie dans le guide creux rectangulaire (1) sensiblement une forme triangulaire.

8. Laser à gaz selon la revendication 6, caractérisé en ce que la profondeur de saillie maximale est maintenue sur une certaine longueur du guide d'ondes (3), de sorte qu'il présente, en saillie dans le guide creux rectangulaire (1), sensiblement une forme quadrangulaire.

9. Laser à gaz selon l'une des revendications 1 à 8, caractérisé en ce que le guide d'ondes (3) est en un matériau actif diélectrique et présente une haute qualité optique.

10. Laser à gaz selon la revendication 9, caractérisé en ce que le guide d'ondes est en une céramique Al₂O₃.

11. Laser à gaz selon la revendication 9 ou 10, caractérisé en ce que les inserts d'un diélectrique sont montés comme guide d'ondes (3) avec des surfaces polies et une très faible rugosité résiduelle.

12. Laser à gaz selon l'une des revendications 1 à 11, caractérisé en ce que la chambre de décharge (4) est aménagée dans un bloc métallique formant boîtier (4′) et en ce que le bloc métallique présente des cavités (5), dans lesquelles de l'eau circule pour le refroidissement.

13. Laser à gaz selon l'une des revendications 1 à 12, caractérisé en ce que trois côtés de la chambre de décharge (4) formés par le bloc de métal (4′) sont revêtus d'or, de platine, ou de couches d'oxyde dopées avec ces métaux.

14. Laser à gaz selon l'une des revendications 1 à 13, caractérisé en ce que la chambre de décharge (4) est fermée et le gaz laser ne subit aucun écoulement.

15. Laser à gaz selon l'une des revendications 1 à 13, caractérisé en ce que le gaz laser présente un écoulement lent.

16. Laser à gaz selon l'une des revendications 1 à 15, caractérisé en ce que le gaz laser est un mélange CO₂: N₂: He: Xe.

17. Laser à gaz selon la revendication 16, caractérisé en ce que les composants CO₂: N₂: He: Xe se trouvent dans les proportions 15: 10: 70: 5 dans le gaz laser.

18. Laser à gaz selon l'une des revendications 1 à 17, caractérisé en ce que la chambre de décharge (4) est réalisée en forme de fente.

19. Laser à gaz selon la revendication 18, caractérisé en ce que la largeur de la chambre de décharge en forme de fente (4) est de 1 à 2 millimètres.

20. Laser à gaz selon l'une des revendications 1 à 19, caractérisé par un court-circuit déplaçable (9) introduit à l'extrémité du guide creux rectangulaire (1).

21. Laser à gaz selon l'une des revendications 1 à 20, caractérisé en ce qu'il présente un résonateur instable (7).

22. Laser à gaz selon l'une des revendications 1 à 21, caractérisé en ce que la fréquence HF est comprise entre 1 GHz et 12 GHz.

23. Laser à gaz selon l'une des revendications 1 à 22, caractérisé en ce que deux ou plusieurs chambres de décharge (4) sont agencées en superposition et/ou côte à côte et le rayonnement laser est à chaque fois conduit par des dispositifs de renvoi (7′) d'une chambre de décharge (4) à la suivante.

24. Laser à gaz selon l'une des revendications 1 à 23, caractérisé en ce que l'extraction par l'intermédiaire du guide d'ondes (3) a lieu sur un grand côté du guide creux rectangulaire (1).

25. Laser à gaz selon l'une des revendications 1 à 24, caractérisé en ce que l'énergie HF est extraite du guide creux rectangulaire (1) sur plusieurs côtés du guide creux rectangulaire (1) sur la même hauteur par rapport à la longueur.

26. Laser à gaz selon la revendication 25, caractérisé en ce que l'extraction est effectuée avec des guides d'ondes (3) sur les quatres côtés du guide creux rectangulaire (1).
